## Europäisches Patentamt

(19) **European Patent Office**

**Office européen des brevets**

(11) Veröffentlichungsnummer: **0 152 901**
**B1**

(12) # EUROPÄISCHE PATENTSCHRIFT

(45) Veröffentlichungstag der Patentschrift:
**31.08.88**

(51) Int. Cl.⁴: **F 16 N 25/02**

(21) Anmeldenummer: **85101512.3**

(22) Anmeldetag: **13.02.85**

(54) Progressivverteiler.

(30) Priorität: **17.02.84 DE 3405690**

(43) Veröffentlichungstag der Anmeldung:
**28.08.85 Patentblatt 85/35**

(45) Bekanntmachung des Hinweises auf die Patenterteilung:
**31.08.88 Patentblatt 88/35**

(84) Benannte Vertragsstaaten:
**AT BE CH FR GB IT LI LU NL SE**

(56) Entgegenhaltungen:
**GB-A-801 551**
**US-A-2 146 424**
**US-A-2 986 234**
**US-A-3 337 003**
**US-A-3 459 278**
**US-A-4 186 821**
**US-A-4 364 452**

(73) Patentinhaber: **Lincoln GmbH, Heinrich- Hertz-Strasse, D-6909 Walldorf (DE)**

(72) Erfinder: **Rodemer, Karl c/o KEIL & SCHAAFHAUSEN, Eysseneckstrasse 31, D-6000 Frankfurt am Main 1 (DE)**

(74) Vertreter: **Keil, Rainer A., Dipl.- Phys. Dr., KEIL & SCHAAFHAUSEN Patentanwälte Eysseneckstrasse 31, D-6000 Frankfurt am Main 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung bezieht sich auf einen Progressivverteiler gemäß dem Oberbegriff von Anspruch 1 bzw. Anspruch 4.

Ein derartiger Progressivverteiler ist aus der US-A-2 146 424 bekannt, bei welchem die in Gehäusebohrungen hin- und herbewegbaren Kolben definierte Schmierstoffmengen an die zugeordneten Schmierstellen abgeben. Zur Erhöhung der einer bestimmten Schmierstelle zugeführten Schmierstoffmenge ist ein Zusatzzylinder vorgesehen, welcher parallel zu dem dieser Schmierstelle zugeordneten Kolben geschaltet ist. Dabei wird, wenn derjenige Kolben, an dessen Gehäusebohrung der Zusatzzylinder angeschlossen ist, durch Beaufschlagung seiner einen Stirnfläche von einer Seite zur anderen geschoben wird, aus dem diesem Kolben zugeordneten Auslaß nicht nur die von der gegenüberliegenden Stirnfläche dieses Kolbens verdrängte Schmierstoffmenge abgegeben, sondern zusätzlich auch noch die durch gleichzeitiges Verschieben des Zusatzkolbens von seiner einen Endlage in die gegenüberliegende Endlage verdrängte Schmierstoffmenge. Diese zusätzliche Schmierstoffmenge kann durch Einstellen der Endlagen des Zusatzkolbens variiert werden.

Schließlich ist ein Progressivverteiler aus der US-A-4 364 452 bekannt, welcher dafür vorgesehen ist, pro Arbeitstakt eines jeden der in einer Gehäusebohrung geführten, doppeltwirkenden Primärzylinders zwei Schmierstellen alternierend mit unterschiedlichen Schmierstoffmengen zu versorgen. Hierfür ist jedem Primärzylinder jeweils ein Sekundärzylinder zugeordnet, welcher über eine Stichleitung in der zu der einen Schmierstelle führenden Auslaßleitung mit dem Primärzylinder in Strömungsverbindung steht. Stromab des Anschlusses für die Stichleitung weist die Ausgangsleitung eine Drosselstelle auf, so daß der Sekundärzylinder nur von einem Teil der vom Primärzylinder verdrängten Schmierstoffmenge beaufschlagt wird. Der Sekundärzylinder weist im Vergleich zum Primärzylinder eine kleinere Arbeitskammer auf, so daß der auslaßseitig mit dem Sekundärzylinder in Strömungsverbindung stehenden zweiten Schmierstelle eine geringere Schmierstoffmenge zugeführt werden kann. Für die entgegengesetzte Bewegungsrichtung des doppeltwirkenden Primär- und Sekundärzylinders ist die Ausgangsleitung des Sekundärzylinders ebenfalls als Stichleitung zu einer im nächsten Arbeitstakt die Auslaßleitung des Primärzylinders bildenden Leitung ausgeführt mit stromab abgeordneter Drosselstelle.

Aufgabe der vorliegenden Erfindung ist es, einen Progressivverteiler der eingangs genannten Art mit zusätzlichen Funktionen auszustatten und dadurch für neuartige Anwendungen einsetzbar zu machen, insbesondere auch dort, wo Maschinen mit sehr geringen Mengen geschmiert werden sollen oder wo einzelne Schmierstellen häufig, andere aber bspw. nur täglich, wöchentlich oder monatlich zu versorgen sind.

Diese Aufgabe wird erfindungsgemäß mit einem Progressivverteiler der eingangs genannten Art im wesentlichen durch die in Anspruch 1 bzw. Anspruch 4 enthaltenen Merkmale gelöst.

Bei der einen Lösung setzt der Verschiebezyklus der einzelnen Kolben solange aus, bis der Gesamtinhalt des Zusatzzylinders entleert ist, da wenigstens einer der Kolben sich gegen einen Auslaßdruck verschieben müßte, der höher ist, als der Auslaßdruck, den der Zusatzkolben unter Berücksichtigung der Reibungsverluste zu überwinden hat. Bei der anderen Lösung sperrt der Zusatzkolben den erforderlichen Auslaß für die Fortsetzung des Verschiebezyklus der Kolben so lange, bis der Zusatzkolben von seiner einen Endlage in die andere Endlage verschoben worden ist, und seine Umfangsnut den erforderlichen Auslaß für die Fortsetzung des Verschiebezyklus freigibt. Die erste Lösungsvariante hat den Vorteil, daß der Kolbenhub kontinuierlich veränderbar ist. Die zweite Lösungsvariante hat den Vorteil, daß sie bei allen Druckverhältnissen funktionssicher arbeitet, da es auf einen erhöhten Gegendruck an wenigstens zwei gegenüberliegenden Auslässen eines Kolbens nicht ankommt.

Ein erfindungsgemäß ausgestalteter Progressivverteiler mit Zusatzzylinder wirkt also als hydraulisches Zeitglied, wobei die Zeitverzögerung für die Fortsetzung des Verschiebezyklus durch das Volumen des Zusatzzylinders bestimmbar oder bestimmt ist.

Derjenige Auslaß, der nicht nur die feststehende Menge des zugehörigen Kolbens, sondern auch noch die Menge des Zusatzkolbens abgibt, kann beispielsweise über eine Rücklaufleitung zur Pumpe zurückgeführt werden. Da der Progressivverteiler erst nach Abgabe der größeren Menge entsprechend dem Volumen des Zusatzzylinders weitertaktet, entsteht eine vorgebbare bzw. vorgegebene Zeitverzögerung.

Bei der ersten Lösungsvariante arbeitet der Kolben, welcher dem Kolben nachfolgt, dessen Gehäusebohrung stirnseitig mit dem Zusatzzylinder verbunden ist, beidseitig gegen den höheren Ausgangsdruck. Hierdurch wird erreicht, daß der demjenigen Kolben, an dessen Gehäusebohrung der Zusatzzylinder angeschlossen ist, unmittelbar nachfolgende Kolben erst in seine gegenüberliegende Endlage verschoben werden kann, wenn das zusätzliche Schmierstoffvolumen des Zusatzzylinders abgegeben worden ist. Andere Kolben werden in der Zwischenzeit nicht bewegt.

Bei der ersten Variante können ferner die Anschläge für den Zusatzkolben einstellbar sein, so daß das Kolbenvolumen und damit auch die Zeitverzögerung, die mit dem Progressivverteiler erreicht wird, entsprechend einstellbar ist.

Bei der zweiten Variante ist es zweckmäßig, daß die Auslässe des Kolbens, welcher dem Kolben nachfolgt, dessen Gehäusebohrung stirnseitig mit dem Zusatzzylinder verbunden ist, von der Umfangsnut freigegeben wird. Auch hierdurch wird erreicht, daß sich andere Kolben nicht verschieben, bevor die gesamte Schmierstoffmenge des Zusatzzylinders zusätzlich abgegeben worden ist.

Eine besonders einfache konstruktive Ausführungsform erhält man dann, wenn gemäß einer Weiterbildung des Erfindungsgedankens der Zusatzzylinder unmittelbar an das Verteilergehäuse angrenzt und die Verbindungskanäle durch ineinander übergehende Bohrungen des Verteilergehäuses und des Zusatzzylinders gebildet sind. Dies erlaubt eine einfache Herstellung, leichte Montage und zuverlässige Funktion.

Dem gleichen Zweck dient es, wenn die von dem Zusatzkolben gesteuerten Auslässe durch ineinander übergehende Bohrungen des Verteilergehäuses und des Zusatzzylinders gebildet sind.

Weitere Ziele, Merkmale, Vorteile und Anwendungsmöglichkeiten der vorliegenden Erfindung ergeben sich aus der nachfolgenden Beschreibung von Ausführungsbeispielen anhand der beiliegenden Zeichnung. Dabei bilden alle beschriebenen und/oder bildlich dargestellten Merkmale für sich oder in beliebiger sinnvoller Kombination den Gegenstand der vorliegenden Erfindung auch unabhängig von ihrer Zusammenfassung in den Ansprüchen oder deren Rückbeziehung.

Es zeigt:

Fig. 1 schematisch geschnitten eine Ausführungsform eines Progressivverteilers nach der Erfindung,

Fig. 2 eine entsprechende Darstellung für eine weitere Ausführungsform, und

Fig. 3 ein schaltungstechnisches Anwendungsbeispiel eines die Erfindung aufweisenden Progressivverteilers.

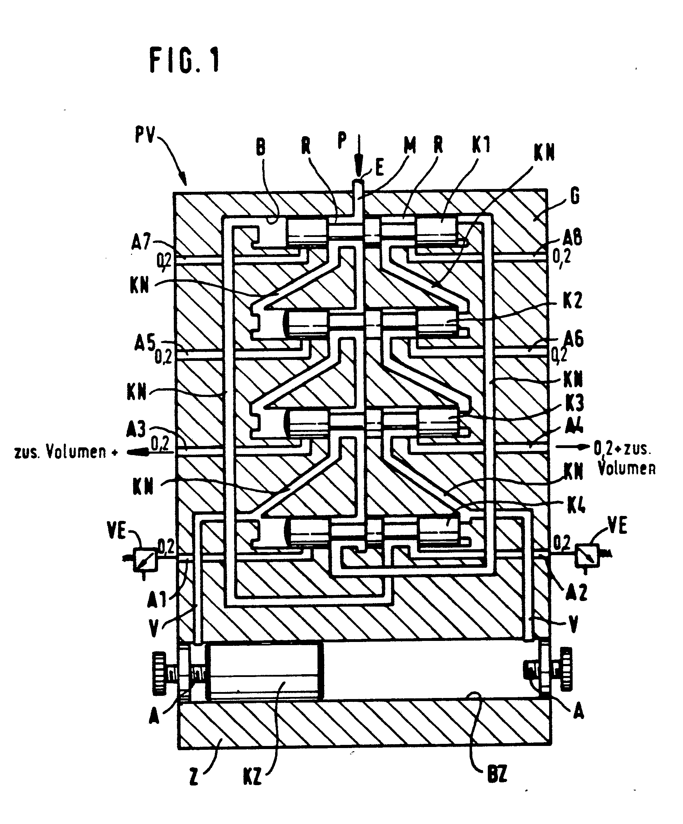

Das Ausführungsbeispiel gemäß Fig. 1 bezieht sich auf einen Progressivverteiler PV mit einem Verteilergehäuse G, in welchem in Gehäusebohrungen B vier Kolben K1 bis K4 durch den über den Einlaß E von einer Pumpe P zugeführten Schmierstoff hin- und herbewegt werden. Den Gehäusebohrungen B bzw. den Kolben K1 bis K4 sind acht Auslässe A1 bis A8 zugeordnet. Jeder Kolben K1 bis K4 weist zwei Ringnuten R im axialen Abstand voneinander auf. Die jeweiligen Stirnseiten der Gehäusebohrungen B stehen über Kanäle KN mit der jeweils vorhergehenden Gehäusebohrung B im Bereich der Ringnuten R der entsprechenden Kolben K1 bis K4 in Verbindung. Für die obersten drei Bohrungen liegen dabei der Bereich der Ringnut R und die Stirnseite der nachfolgenden Gehäusebohrung B auf der gleichen Seite der (senkrecht zur Zeichnungsebene stehenden, von oben nach unten verlaufenden) Mittellängsebene.

Die Gehäusebohrung B des untersten Kolbens K4 steht über die Kanäle KN im Bereich der Ringnuten R jedoch jeweils mit der bezüglich der genannten Mittellängsachse gegenüberliegenden Stirnseite der Gehäusebohrung B des obersten Kolbens K1 in Verbindung. Die Auslässe A1 bis A8 sind jeweils über die Gehäusebohrung B und die Ringnut R des jeweils vorhergehenden Kolbens K1 bis K4 geführt. Die Gehäusebohrungen B stehen alle über eine Mittelbohrung M mit dem Einlaß E in Verbindung. Auf diese Weise wird erreicht, daß die Kolben K1 bis K4 unter Einwirkung des zugeführten Schmierstoffes auf der einen Stirnseite und unter Abgabe einer bestimmten Schmierstoffmenge über einen der Auslässe A1 bis A8 auf der anderen Seite abwechselnd in die beiden Endstellungen in ihrer Gehäusebohrung B gedrückt werden. Der jeweils nächste Kolben K1 bis K4 kann erst dann vom Schmierstoff verschoben werden, wenn die Kolbenbewegung des vorgegangenen Kolbens K1 bis K4 nahezu abgeschlossen ist. Wahlweise kann sich an eine oder mehrere der Gehäusebohrungen B, im dargestellten Fall an die Gehäusebohrung B des Kolbens K4, je ein Verbindungskanal V anschließen. Die Verbindungskanäle V führen zum stirnseitigen Ende einer Bohrung BZ eines an das Verteilergehäuse G angrenzenden Zusatzzylinders Z. Die Verbindungskanäle V sind in dem dargestellten Fall durch ineinander übergehende Bohrungen des Verteilergehäuses G und des Zusatzzylinders Z gebildet. In der Bohrung BZ läßt sich ein Zusatzkolben KZ unter Einwirkung des Schmierstoffes zwischen zwei Anschlägen A hin- und herbewegen. Die Anschläge A sind axial einstellbar, so daß der Schiebeweg des Zusatzkolbens KZ veränderbar ist. Die Fördermenge des Zusatzzylinders Z kann dadurch innerhalb vorgegebener Grenzen auf einen beliebigen Wert eingestellt werden. Außer diesem angeschlossenen Zusatzzylinder Z weist der Progressivverteiler PV in den Auslässen A1 und A2, die über die Ringnuten R des Kolbens K4, also desjenigen Kolbens, an dessen Bohrung B der Zusatzzylinder Z über die Verbindungskanäle V angeschlossen ist, je ein Überströmventil oder Rückschlagventil VE mit Gegendruck auf, um den Gegendruck an diesen Auslässen A1 und A2 gegenüber den anderen Auslässen A3 bis A8 zu erhöhen.

Wird nun Schmierstoff durch den Einlaß E in den Progressivverteiler PV gefördert, so werden zunächst über die Mittelbohrung M und die Kanäle KN die Kolben K1 bis K4 (je nach Ausgangsstellung) auf eine Seite in ihre dortige Endlage gedrückt. Bei der in Fig. 1 dargestellten Ausgangsstellung befinden sich bereits alle Kolben K1 bis K4 auf der rechten Seite. Der Kolben K4 hat durch seine Bewegung von links nach rechts gerade eine vorgegebene Schmierstoffmenge von 0,2 cm³ über den Auslaß A4 abgegeben. Da die Mittelbohrung M über einen Kanal KN und den linken Verbindungskanal V mit dem stirnseitigen Ende der Bohrung BZ in Strömungsverbindung steht, wird nunmehr der Zusatzkolben KZ von links nach rechts verschoben und die in der Bohrung BZ befindliche Schmierstoffmenge über den rechten Verbindungskanal V an dem Kolben K4 vorbei und über den rechten Kanal KN zu dem Auslaß A4 gefördert. Aus dem Auslaß A4 wird also die feststehende Schmierstoffmenge des Kolbens K4, im dargestellten Fall 0,2 cm³, und die mittels der Anschläge A regulierbare zusätzliche Schmierstoffmenge des Zusatzzylinders Z abgegeben. Der Progressivverteiler PV kann unter Verschiebung des Kolbens K1 von rechts nach links erst dann weiterlaufen, wenn die gesamte Schmierstoffmenge aus dem Zusatzzylinder Z über den Auslaß A4 abgegeben worden ist, da an dem Auslaß A2 aufgrund des Ventiles VE ein höherer Gegendruck ansteht, als an dem Auslaß A4. Der Differenzdruck zwischen diesen beiden Auslässen A2 und A4 ist höher als die Reibungsverluste des Zusatzzylinders Z. Der von dem Ventil VE erzeugte Gegendruck kann beispielsweise bei 30 bar liegen. Nach vollständiger Verschiebung des Zusatzzylinders Z arbeitet der Progressivverteiler PV weiter, indem alle Kolben K1 bis K4 und der Zusatzkolben KZ wieder nach links verschoben werden, und der Zyklus beginnt von neuem.

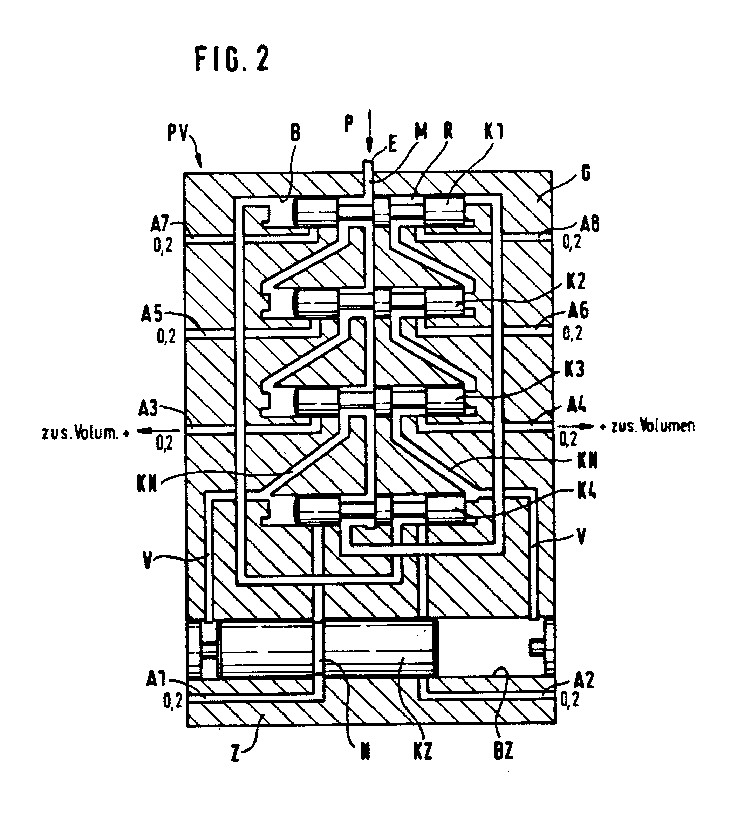

Der Progressivverteiler gemäß Fig. 2 stimmt, soweit er sich des herkömmlichen Progressivverteilerteiles mit Zusatzzylinder bedient, mit demjenigen der Fig. 1 überein. Er unterscheidet sich jedoch dadurch, daß die Auslässe A1 und A2 nicht unmittelbar aus dem Verteilergehäuse G herausgeführt und mit einem Ventil VE versehen sind, wie dies bei der Ausführungsform von Fig. 1 der Fall ist. Vielmehr sind die Auslässe A1 und A2 durch ineinander übergehende Bohrungen des Verteilergehäuses G und des Zusatzzylinders Z gebildet, die von einer Umfangsnut N des Zusatzkolbens KZ in der Weise gesteuert werden, daß der Auslaß A1 lediglich dann geöffnet ist, wenn sich der Zusatzzylinder KZ in der dargestellten linken Endstellung befindet, während der Auslaß A2 nur dann durchgängig ist, wenn sich der Zusatzzylinder KZ in der rechten Endstellung befindet.

In der in Fig. 2 dargestellten Ausgangslage befinden sich alle Kolben K1 bis K4 bereits in ihrer rechten Endstellung. Der Kolben K4 hat durch seine Bewegung von links nach rechts gerade eine Schmierstoffmenge von 0,2 cm³ über den rechten Kanal KN und die Ringnut R des Kolbens K3 an den Auslaß A4 abgegeben. Da der Auslaß A2 durch die Stellung des Zusatzkolbens KZ versperrt ist, wird durch die weitere Schmierstoffzufuhr über die Mittelbohrung M, den zu der Gehäusebohrung B des Kolbens K4 führenden Kanal KN und den Verbindungskanal V zunächst der Zusatzkolben Z in seine rechte Endlage gedrückt, wodurch über den rechten Verbindungskanal V an dem Kolben K4 vorbei die von dem Zusatzkolben KZ verdrängte Schmierstoffmenge aus dem Auslaß A4 zusätzlich abgegeben wird. Erst wenn der Zusatzkolben KZ seine rechte Endlage erreicht hat, kann der neue Taktzyklus des Progressivverteilers PV unter Verschiebung des Kolbens K1 von rechts nach links von neuem beginnen, da nun der Auslaß A2 wieder geöffnet ist. In dem dargestellten Ausführungsbeispiel wird die Steuerung der Auslässe A1 und A2 mit einer einzigen Umfangsnut N des Zusatzkolbens KZ bewerkstelligt. Es ist auch möglich, daß der Zusatzkolben KZ zwei oder mehrere Umfangsnuten N hat. Auf diese Weise kann auch eine allerdings nur diskrete Veränderung des Kolbenhubes des Zusatzzylinders KZ eingestellt werden. Der Vorteil des Progressivverteilers PV nach Fig. 2 besteht insbesondere darin, daß er bei allen Druckverhältnissen sicher funktioniert, während bei der Ausführungsform gemäß Fig. 1 der höhere Gegendruck an den Auslässen A1 und A2 gewährleistet sein muß.

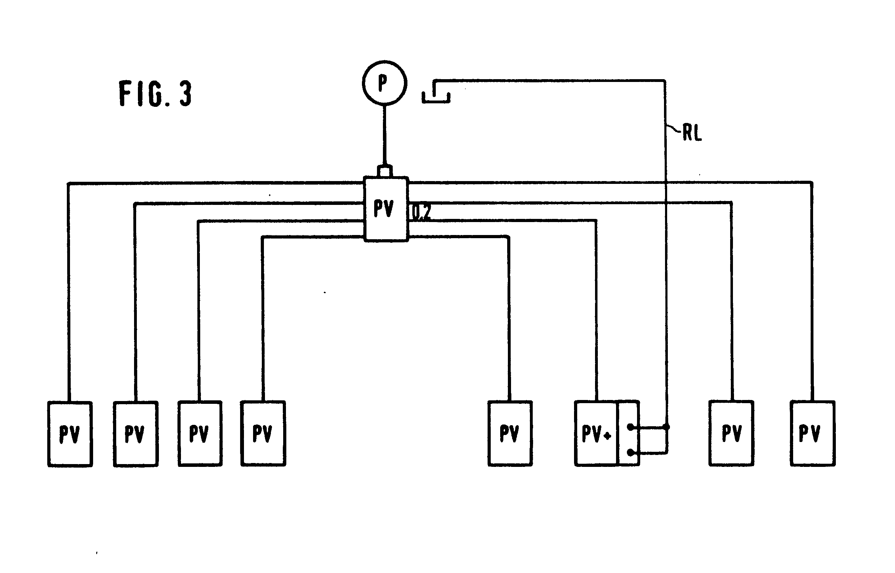

Ein Einsatzbeispiel eines Progressivverteilers nach der Erfindung wird jetzt anhand der Fig. 3 näher erläutert. In dieser Darstellung bezeichnet P die Schmierstoffpumpe, PV herkömmliche Progressivverteiler und PV+ einen erfindungsgemäß ausgestalteten Progressivverteiler. Es sei ein Beispiel betrachtet, bei welchem eine zu schmierende Maschine Schmierstellen hat, die täglich versorgt werden müssen, und Schmierstellen, die wöchentlich oder monatlich zu versorgen sind. Sind nun bei einem Zentralschmiersystem, wie dem in Fig. 3 veranschaulichten, an einen Hauptverteiler PV parallel mehrere Unterverteiler PV angeschlossen, so wird derjenige Verteiler, der die Schmierstelle mit der geringeren Schmierstoffmenge versorgen soll, entsprechend der Erfindung ausgebildet. Die kalkulierbare höhere Fördermenge des Zusatzzylinders wird über eine Rücklaufleitung RL zur Pumpe P zurückgeführt. Da der Progressivverteiler PV+ erst nach Abgabe der größeren Schmierstoffmenge weitertaktet, entsteht eine berechenbare Zeitverzögerung. Haben die Progressivverteiler entsprechend der Darstellung jeweils acht Auslässe, so ist die Bedarfsmenge für den Umlauf eines Progressivverteilers bei einer feststehenden Abgabemenge der einzelnen Kolben von 0,2 cm³ insgesamt $8 \times 0,2$ cm³ $= 1,6$ cm³. Die gesamte Bedarfsmenge des Progressivverteilers PV+ beträgt beispielsweise $6 \times 0,2$ cm³ $+ 2 \times 4,7$ cm³ $= 10,6$ cm³, wenn das Fördervolumen des Zusatzzylinders KZ 4,5 cm³ beträgt. Wenn der Progressivverteiler PV+ an einen Abgang des Hauptverteilers PV angeschlossen ist, so muß der Hauptverteiler 10,6 cm³ : 0,2 cm³ $= 53$ mal umlaufen, damit der erfindungsgemäße Progressivverteiler PV+ einmal umläuft. Alle übrigen Unterverteiler (z. B. mit 8 Auslässen) laufen dann 10,6 : 1,6 $= 6,6$ mal um. Das Abgabeverhältnis zu den anderen Verteilern PV ist 1 : 6.

Die zeitliche maximale Verzögerung durch Verwendung eines erfindungsgemäßen Progressivverteilers PV+ ist gleich der gesamten Fördermenge des erfindungsgemäßen Progressivverteilers PV + geteilt durch die Fördermenge des oder der parallel angeschlossenen herkömmlichen Progressivverteiler PV. Der überschüssige Schmierstoff des Zusatzzylinders Z wird zurückgeführt.

Ein weiteres Anwendungsbeispiel des erfindungsgemäßen Progressivverteilers besteht darin, daß, mit einer sehr geringen Menge geschmiert, der Antrieb der Schmierstoffpumpe aber von der Maschine abgenommen werden soll. Üblicherweise wäre hier der Einsatz eines hohen Untersetzungsgetriebes erforderlich. Sehr langsame Pumpen haben aber oft Ansaugschwierigkeiten und hohe Leckverluste in den Kolbenbohrungen. Verwendet man eine erfindungsgemäßen Progressivverteiler, so kann eine solche Schmieranlage mit schnell laufender Pumpe betrieben werden. Der erfindungsgemäße Progressivverteiler sorgt für die entsprechende Verzögerungszeit. Die eigentliche Schmierung der Maschine erfolgt dann nur während einer kurzen Zeitspanne, während für die Dauer der langen Pausenzeiten die Pumpen den Schmierstoff über den erfindungsgemäßen Verteiler mit Zusatzzylinder in den Vorratsbehälter zurückfördert.

Der erfindungsgemäße Progrossivverteiler stellt also ein Art hydraulisches Zeitglied dar.

**Patentansprüche**

1. Progressivverteiler mit drei oder mehr je in einer Gehäusebohrung (B) verschiebbaren Kolben (K1 bis K4), welche unter Abgabe einer bestimmten Schmierstoffmenge über einen Auslaß (A1 bis A8), welcher über die Gehäusebohrung (B) und eine Ringnut (R) des jeweils vorhergehenden Kolbens (K1 bis K4) geführt ist, vom Schmierstoff abwechselnd in die beiden Endstellungen in ihrer Gehäusebohrung (B) gedrückt werden, wobei die Kolben (K1 bis K4) mit Hilfe je zweier Ringnuten (R) aufeinanderfolgend von dem Schmierstoff so gesteuert werden, daß der nächste Kolben (K1 bis K4) erst dann vom Schmierstoff verschoben werden kann, wenn die Kolbenbewegung des vorangegangenen Kolbens (K1 bis K4) nahezu abgeschlossen ist, wobei alle Gehäusebohrungen (B) durch eine Mittelbohrung (M) mit dem Einlaß (E) verbunden sind, wobei Kanäle (KN) die Gehäusebohrung (B) des vorhergehenden Kolbens (K1 bis K4) im Bereich der Ringnuten (R) mit den Stirnseiten der Gehäusebohrung (B) des nachfolgenden Kolbens (K1 bis K4) verbinden, und zwar bis auf einen Kolben (K4) bei auf gleicher Seite liegender Ringnut (R) und Stirnseite, bei dem einen Kolben (K4) jedoch bei auf unterschiedlicher Seite liegender Ringnut (R) und Stirnseite, und wobei jeweils ein Verbindungskanal (V) die jeweiligen Stirnseiten wenigstens einer Gehäusebohrung (B), jedoch nicht aller Gehäusebohrungen (B), mit jeweils einer Stirnseite der Bohrung (BZ) eines Zusatzzylinders (Z) verbindet, in welchem ein Zusatzkolben (KZ) zwischen zwei Anschlägen (A) von dem Schmierstoff hin- und herbewegbar angeordnet ist, dadurch gekennzeichnet, daß wenigstens ein Kolben (K1 bis K4) gegen jeweils einen Ausgangsdruck fördern muß, der höher ist als der Auslaßdruck, gegen welche der Zusatzkolben (KZ) arbeitet, und daß für die Erzeugung des höheren Ausgangsdruckes den entsprechenden Auslässen (A1, A2) ein Überströmventil oder ein Rückschlagventil (VE) mit Gegendruck zugeordnet ist (Fig. 1).

2. Progressivverteiler nach Anspruch 1, dadurch gekennzeichnet, daß der Kolben (K1), welcher dem Kolben (K4) nachfolgt, dessen Gehäusebohrung (B) stirnseitig mit dem Zusatzzylinder (Z) verbunden ist, gegen den höheren Ausgangsdruck arbeitet.

3. Progressivverteiler nach Anspruch 1 oder 2, dadurch gekennzeichnet, daß die Anschläge (A) einstellbar sind.

4. Progressivverteiler mit zwei oder mehr je in einer Gehäusebohrung (B) verschiebbaren Kolben (K1 bis K4), welche unter Abgabe einer bestimmten Schmierstoffmenge über einen Auslaß (A1 bis A8), welcher über die Gehäusebohrung (B) und eine Ringnut (R) des jeweils vorhergehenden Kolbens (K1 bis K4) geführt ist, vom Schmierstoff abwechselnd in die beiden Endstellungen in ihrer Gehäusebohrung (B) gedrückt werden, wobei die Kolben (K1 bis K4) mit Hilfe je zweier Ringnuten (R) aufeinanderfolgend von dem Schmierstoff so gesteuert werden, daß der nächste Kolben (K1 bis K4) erst dann vom Schmierstoff verschoben werden kann, wenn die Kolbenbewegung des vorangegangenen Kolbens (K1 bis K4) nahezu abgeschlossen ist, wobei alle Gehäusebohrungen (B) durch eine Mittelbohrung (M) mit dem Einlaß (E) verbunden sind, wobei Kanäle (KN) die Gehäusebohrung (B) des vorhergehenden Kolbens (K1 bis K4) im Bereich der Ringnut (R) mit den Stirnseiten der Gehäusebohrung (B) des nachfolgenden Kolbens (K1 bis K4) verbinden, und zwar bis auf einen Kolben (K4) bei auf gleicher Seite liegender Ringnut (R) und Stirnseite, bei dem einen Kolben (K4) jedoch bei auf unterschiedlicher Seite liegender Ringnut (R) und Stirnseite, und wobei jeweils ein Verbindungskanal (V) die jeweiligen Stirnseiten wenigstens einer Gehäusebohrung (B), jedoch nicht aller Gehäusebohrungen (B), mit jeweils einer Stirnseite der Bohrung (BZ) eines Zusatzzylinders (Z) verbindet, in welchem ein Zusatzkolben (KZ) zwischen zwei Anschlägen (A) von dem Schmierstoff hin- und herbewegbar angeordnet ist, dadurch gekennzeichnet, daß der Zusatzkolben (KZ) wenigstens eine Umfangsnut (N) aufweist, welche nur in den beiden Endstellungen des Zusatzkolbens (KZ) jeweils einen Auslaß (A1, A2) eines Kolbens (K1) freigibt

5. Progressivverteiler nach Anspruch 4, dadurch gekennzeichnet, daß die Auslässe (A1, A2) des Kolbens (K1), welcher dem Kolben (K4) nachfolgt, dessen Gehäusebohrung (B) stirnseitig mit dem Zusatzzylinder (Z) verbunden ist, von der Umfangsnut (N) freigegeben werden.

6. Progressivverteiler nach einem der Ansprüche 1 bis 5 dadurch gekennzeichnet, daß der Zusatzzylinder (Z) unmittelbar an das Verteilergehäuse (G) angrenzt und Verbindungskanäle (V) durch ineinander übergehende Bohrungen des Verteilergehäuses (G) und des Zusatzzylinders (Z) gebildet sind.

7. Progressivverteiler nach Anspruch 6, dadurch gekennzeichnet, daß die von dem Zusatzkolben (KZ) gesteuerten Auslässe (A1, A2) durch ineinander übergehende Bohrungen des Verteilergehäuses (G) und des Zusatzzylinders (Z) gebildet sind.

## Claims

1. Progressive distributor with three or more pistons (K1 to K4), each slidable in a casing bore (B), which, under discharge of a certain quantity of lubricant through an outlet (A1 to A8) led via the casing bore (B) and an annular groove (R) of always the respective preceding piston (K1 to K4), are pressed by the lubricant alternatingly into the two final positions in their casing bore (B), the pistons (K1 to K4) being controlled successively by the lubricant by means of two annular grooves (R) in such manner that the next piston (K1 to K4) can be displaced by the lubricant only after the piston motion of the preceding piston (K1 to K4) has almost been accomplished, all casing bores (B) being connected by a centre bore (M) with the inlet (E), channels (KN) connecting the casing bore (B) of the preceding piston (K1 to K4) in the area of the annular grooves (R) with the front sides of the casing bore (B) of the following piston (K1 to K4), and that, except for one piston (K4), with the annular grooves (R) and the front side placed on the same side, in the one piston (K4), however, with the annular groove (R) and the front side placed on different sides, and wherein always one connecting channel (V) connects the respective front sides of at least one casing bore (B), however not all casing bores (B), with always a front side of the bore (BZ) of an additional cylinder (Z) wherein an additional piston (KZ) is arranged so as to be slidable to and fro by the lubricant between two stops (A), characterized in that at least one piston (K1 to K4) must operate against always one initial pressure which is higher than the discharge pressure against which the additional piston (KZ) operates and that for the production of the higher initial pressure the respective outlets (A1, A2) are provided with a relief valve or a non-return valve (VE) with counterpressure (Fig. 1).

2. Progressive distributor according to claim 1, characterized in that the piston (K1) which follows the piston (K4), whose casing bore (B) is connected on its front side with the additional cylinder (Z), works against the higher initial pressure.

3. Progressive distributor according to claim 1 or 2, characterized in that the stops (A) are adjustable.

4. Progressive distributor with two or more pistons (K1 to K4), each slidable in a casing bore (B), which, under discharge of a certain quantity of lubricant through an outlet (A1 to A8) led via the casing bore (B) and an annular groove (R) of always the respective preceding piston (K1 to K4), are pressed by the lubricant alternatingly into the two final positions in their casing bore (B), the pistons (K1 to K4) being controlled successively by the lubricant by means of two annular grooves (R) in such manner that the next piston (K1 to K4) can be displaced by the lubricant only after the piston motion of the preceding piston (K1 to K4) has almost been accomplished, all casing bores (B) being connected by a centre bore (M) with the inlet (E), channels (KN) connecting the casing bore (B) of the preceding piston (K1 to K4) in the area of the annular groove (R) with the front sides of the casing bore (B) of the following piston (K1 to K4), and that, except for one piston (K4), with the annular groove (R) and the front side being placed on different sides, and wherein always one connecting channel (V) connects the respective front sides of at least one casing bore (B), however not all casing bores (B), with always a front side of the bore (BZ) of an additional cylinder (Z) wherein an additional piston (KS) is arranged so as to be slidable to and fro by the lubricant between two stops (A), characterized in that the additional piston (KZ) is provided with at least one peripheral groove (N), which only in the two final positions of the additional piston (KZ) clears one outlet each (A1, A2) of a pistion (K1).

5. Progressive distributor according to claim 4, characterized in that the outlets (A1, A2) of the piston (K1) which follows the piston (K4), whose casing bore (B) is connected on its front side with the additional cylinder (Z), are cleared by the peripheral groove (N).

6. Progressive distributor according to one of the claims 1 to 5, characterized in that the additional cylinder (Z) is immediately adjacent the distributor chamber (G) and that connecting channels (V) are formed by bores leading into one another of the distributor chamber (G) and the additonal cylinder (Z).

7. Progressive distributor according to claim 6, characterized in that the outlets (A1, A2) controlled by the addional piston (KZ) are formed by bores leading into one another of the distributor chamber (G) and the additional cylinder (Z).

## Revendications

1. Distributeur progressif avec trois pistons (K1 à K4) ou plus, chacun déplaçable dans un alésage boîte (B), qui, sous décharge d'une certaine quantité de lubrifiant par une sortie (A1 à A8) menée par l'alésage boîte (B) et une rainure circulaire (R) du piston précédant respectif (K1 à K4), sont pressés par le lubrifiant alternativement dans les deux positions de fin de course dans leur alésage boîte (B), les pistons (K1 à K4) étant commandés successivement par le lubrifiant à l'aide de deux rainures circulaires (R) de telle manière, que le piston prochain (K1 à K4) ne peut être déplacé par le lubrifiant qu'après la course du piston précédant (K1 à K4) est presque terminée, tout les alésages boîte (B) étant liés par un alésage central (M) avec l'entrée (E), des canaux (KN) liant l'alésage boîte (B) du piston précédant (K1 à K4) dans la région des rainures circulaires (R) avec les côtés frontaux de l'alésage boîte (B) du piston suivant (K1 à K4), et cela, à l'exception d'un piston (K4), avec la rainure circulaire (R) et le coté frontal étant disposés sur le même côté, dans le cas du piston (K4) mentionné pourtant avec la rainure circulaire (R) et le côté frontal étant disposés sur des côtés différents, toujours un canal de connexion (V) liant les côtés frontaux respectifs d'au moins un alésage boîte (9), mais pas de tout les alésages boîte (B), avec toujours un côté frontal de l'alésage (BZ) d'un cylindre additionnel (Z), dans lequel un piston additionnel (KZ) est logé de manière à être déplaçable par le lubrifiant en sens aller et retour entre deux arrêts (A), caractérisé en ce qu'au moins toujours un piston (K1 à K4) doit travailler contre toujours une pression initiale plus haute que la pression de décharge contre laquelle le piston additionnel (KZ) travaille, et que pour la production de la pression initiale plus haute les sortie respectives (A1, A2) sont pourvues d'une soupape de décharge ou de retenue (VE) avec contre-pression (fig.1).

2. Distributeur progressif selon revendication 1, caractérisé en ce que le piston (K1), qui suit au piston (K4), dont l'alésage boîte (B) est lié sur le côté frontal avec le cylindre additionnel (Z), travaille contre la pression initiale plus haute.

3. Distributeur progressif selon revendication 1 ou 2, caractérisé en ce que les arrêts (A) sont réglables.

4. Distributeur progressif avec deux pistons (K1 à K4) ou plus, chacun déplaçable dans un alésage boîte (B), qui, sous décharge d'une certaine quantité de lubrifiant par une sortie (A1 à A8) menée par l'alésage boîte (B) et une rainure circulaire (R) du piston précédant respectif (K1 à K4), sont pressés par le lubrifiant alternativement dans les deux positions de fin de course dans leur alésage boîte (B), les pistons (K1 à K4) étant commandés successivement par le lubrifiant à l'aide de deux rainures circulaires (R) de telle manière, que le piston prochain (K1 à K4) ne peut être déplacé par le lubrifiant qu'après la course du piston précédant (K1 à K4) est presque terminée, tout les alésages boîte (B) étant liés par un alésage central (M) avec l'entrée (E), des canaux (KN) liant l'alésage boîte (B) du piston précédant (K1 à K4) dans la région de la rainure circulaire (R) avec les côtés frontaux de l'alésage boîte (B) du piston suivant (K1 à K4), et cela, à l'exception d'un piston (K4), avec la rainure circulaire (R) et le côté frontal étant disposés sur le même côté, dans le cas du piston (K4) mentionné pourtant avec la rainure circulaire (R) et le côté frontal étant disposés sur des côtés différents, toujours un canal de connexion (V) liant les côtés frontaux respectifs d'au moins un alésage boîte (B), mais pas de tout les alésages boîte (B), avec toujours un côté frontal de l'alésage (BZ) d'un cylindre additionnel (Z), dans lequel un piston additionnel (KZ) est logé de manière à être déplaçable par le lubrifiant en sens aller et retour entre deux arrêts (A), caractérisé en ce que le piston additionnel (K5) est pourvu d'au moins une rainure circonférentielle (N), qui seulement dans les deux positions de fin de course du piston additionnel (KZ) dégage toujours une sortie (A1, A2) d'un piston (K1).

5. Distributeur progressif selon revendication 4, caractérisé en ce que les sorties (A1, A2) du piston (K1), qui suit au piston (K4), dont l'alésage boîte (B) est lié sur le côté frontal avec le cylindre additionnel (Z), sont dégagées par la rainure circonférentielle (N).

6. Distributeur progressif selon une des revendications 1 à 5, caractérisé en ce que le cylindre additionnel (Z) est immédiatement voisin de la boîte (G) du distributeur, et que des canaux de connexion (V) sont formés par des alésages menant l'un dans l'autre de la boîte (G) du distributeur et du cylindre additionnel (2).

7. Distributeur progressif selon revendication 6, caractérisé en ce que les sorties (A1, A2) commandées par le piston additionnel (K2) sont formées par des alésages menant l'un dans l'autre de la boîte (G) du distributeur et du cylindre additionnel (Z).

# FIG. 1

# FIG. 2

FIG. 3